# NEUE EUROPÄISCHE PATENTSCHRIFT

(11) **EP 1 691 948 B2**
(45) Veröffentlichungstag und Bekanntmachung des Hinweises auf die Entscheidung über den Einspruch: **12.06.2013**
(45) Hinweis auf die Patenterteilung: 25.04.2007
(21) Anmeldenummer: 04802723.9
(22) Anmeldetag: 12.11.2004
(51) Int. Cl.: B23H 9/10

(54) **VERFAHREN ZUR STRUKTURIERUNG DER AERODYNAMIK VON BAUTEILEN IN FLUGGASTURBINEN**
METHOD FOR AERODYNAMIC STRUCTURING OF COMPONENTS IN AERO GAS TURBINES
PROCEDE POUR STRUCTURER L'AERODYNAMIQUE DE COMPOSANTS DANS DES TURBINES A GAZ D'AVION

(30) Priorität: 10.12.2003 DE 10357629
(43) Veröffentlichungstag der Anmeldung: 23.08.2006
(73) Patentinhaber: MTU Aero Engines GmbH, 80995 München (DE)
(72) Erfinder: BUSSMANN, Martin, 85247 Schwabhausen (DE); KRÄNZLER, Thomas, 88682 Salem (DE); PLATZ, Albin, 86510 Ried-Baindlkirch (DE); STEINWANDEL, Jürgen, 88690 Uhldingen-Mühlhofen (DE)
(74) Vertreter: Schlotter, Alexander Carolus Paul
(86) Internationale Anmeldenummer: PCT/DE2004/002507
(87) Internationale Veröffentlichungsnummer: WO 2005/056226

(56) Entgegenhaltungen:
- EP-A- 0 292 213
- EP-A- 0 327 657
- EP-A- 0 990 481
- EP-A- 1 314 507
- WO-A1-03/099501
- DE-C1- 19 900 173
- DE-C2- 3 609 541
- US-A- 4 822 249
- US-A- 4 907 765
- US-A1- 2003 173 213
- US-B1- 6 379 528
- US-B1- 6 554 571
- WILFRIED KÖNIG: 'Fertigungsverfahren band 3', 1979, VDI VERLAG, ISBN 3184004260 Seiten 85 - 126
- VDI RICHTLINIEN: 'elektrochemisches abtragen formabtragen', Juli 1991, VDI 3401 Seite 1
- SPRINGER VDI-VERLAG: 'Konstruktion', April 1998 vol. 'Haihaut hilft Sprit sparen', Seite 54

## Beschreibung

Die Erfindung betrifft ein Verfahren zur Strukturierung der Aerodynamik von Bauteilen in Fluggasturbinen gemäß dem Oberbegriff des Patentanspruchs 1.

Ein Verfahren zur Herstellung eines Schaufelrades mit am Außenumfang einer Radscheibe angeordneten Schaufelblätter in Blisk-Ausführung ist aus EP 0 327 657 A1 bekannt. Bei diesem Verfahren werden die Schaufelblätter grob vorgearbeitet. Anschließend greifen Formkathoden in die zwischen den Schaufelblättern vorhandenen Lücken ein und mittels elektrochemischer Bearbeitungsverfahren, z.B. ECM (electro chemical machining) werden die Schaufelblätter bis auf Fertigkontur bearbeitet.

Die Effizienz von Verdichtern oder Verdichterrotoren insbesondere in Axialmaschinen, wie sie aus Fluggasturbinen bekannt sind, hängt im Wesentlichen von der aerodynamischen Gestaltung der Schaufeln und Leitkränze der Schaufelräder ab. Zur Verbesserung der Aerodynamik von Flugzeugtragflächen ist es bekannt, den Strömungswiderstand der Tragflächen mittels Grenzschichtabsaugung zu verringern. Außerdem sind strukturelle Maßnahmen auf der Tragflächenoberfläche bekannt mittels welchen eine Grenzschichtaufdickung bzw. -ablösung verhindert werden kann.

Es ist somit Aufgabe der Erfindung, die Aerodynamik von Bauteilen in Fluggassturbinen zu verbessern.

Diese Aufgabe wird mit dem Verfahren gemäß den Merkmalen des Patentanspruchs 1 gelöst. Vorteilhafte Ausführungen des erfindungsgemäßen Verfahrens sind Gegenstand von Unteransprüchen.

Gemäß der Erfindung wird mittels auf der Oberfläche der Formkathoden vorhandener Strukturen auf der Oberfläche der Bauteile eine grenzschichtminimierende Struktur hergestellt.

Mit der erfindungsgemäßen strukturmodifizierten Formkathode ist es somit möglich, auf der Oberfläche der Bauteile eine geeignete Struktur herzustellen, welche im Betrieb grenz
schichtminimierende Eigenschaften aufweist. Vorteilhaft ist das Bauteil ein Schaufelrad mit am Außenumfang angeordneten Schaufelblätter in BLISK-Technologie.

Ein Vorteil dieses Verfahren ist, dass mittels der erfindungsgemäßen Formkathode der Herstellungsprozeß der Bauteile beschleunigt werden kann. Die strukturmodifizierte Formkathode ermöglicht die Herstellung der Bauteile in einem Fertigungprozeß. Mit der erfindungsgemäßen Formkathode ist es somit möglich, die Bauteile geeignet zu konturieren und gleichzeitig mit einer geeigneten Oberflächenstrukturierung zu versehen. Die Kontur der Bauteile sowie die Oberflächenstrukturierung ist dabei derart zu wählen, dass im Betrieb die Bauteile einen hohen Wirkungsgrad aufweisen.

Mit dem erfindungsgemäßen Verfahren entfällt somit der Arbeitsschritt der Oberflächenstrukturierung, welcher beim Stand der Technik erforderlich ist, um die fertigkonturierten Bauteile mit einer Oberflächenstrukturierung zu versehen. Somit können in dem erfindungsgemäßen Verfahren die Fertigkontur und die Fertigstruktur der Bauteile in einem einzigen Fertigungsschritt hergestellt werden.

In einer vorteilhaften Ausführung der Erfindung ist die Struktur der Oberfläche der Formkathoden derart ausgebildet, dass auf der Oberfläche der Schaufelblätter eine zu der Formkathodenoberfläche negative Struktur gebildet wird.

In einer weiteren vorteilhaften Ausführung der Erfindung ist das elektrochemische Bearbeitungsverfahren ein Pulsverfahren.

## Patentansprüche

1. Verfahren zur Herstellung von am Außenumfang eines Schaufelrades von Flugzeuggasturbinen in BLISK-Technologie angeordneten Schaufelblättern durch Konturierung mittels eines elektrochemischen Bearbeitungsverfahrens mit Formkathoden, **dadurch gekennzeichnet, dass** die Oberfläche der Schaufelblätter bei der Konturierung gleichzeitig mit einer zu der Formkathodenoberfläche negativen, grenzschichtminimierenden Struktur in einem Fertigungsschritt versehen wird.

2. Verfahren nach Anspruch 1, **dadurch gekennzeichnet, dass** das elektrochemische Bearbeitungsverfahren ein Pulsverfahren ist.

## Claims

1. A method for producing blades, arranged on the outer circumference of a blade wheel of airplane gas turbines using BLISK technology, by contouring by means of an electrochemical machining method with forming cathodes, **characterised in that** during the contouring simultaneously in one manufacturing step the surface of the blades is provided with a boundary-layer-minimizing structure that is negative with respect to the forming-cathode surface.

2. A method according to claim 1, **characterised in that** the electrochemical machining method is a pulsing method.

## Revendications

1. Procédé pour la fabrication d'aubes disposées à la périphérie extérieure d'une roue à aubes d'une turbine à gaz d'avion en technologie BLISK, par formation du contour au moyen d'un procédé d'usinage électrochimique avec des cathodes de forme, **charactérisé en ce que** lors de la formation du contour, la surface des aubes est simultanément en une seule étape de finition, équipée d'une structure minimisant la couche limite et négative par rapport à la surface des cathodes de forme.

2. Procédé selon la revendication 1, **charactérisé en ce que** le procédé d'usinage électrochimique est un procédé pulsé.
